# EUROPEAN PATENT SPECIFICATION

(11) **EP 3 731 369 B1**
(45) Date of publication and mention of the grant of the patent: **02.08.2023**
(21) Application number: 19170843.7
(22) Date of filing: 24.04.2019
(51) Int. Cl.: H02J 13/00, H02J 3/36, H02J 3/00

(54) **DETERMINING A NETWORK MAP DEFINING A STRUCTURE OF A NETWORK**
BESTIMMUNG EINER NETZWERKKARTE, DIE EINE STRUKTUR EINES NETZWERKS DEFINIERT
DÉTERMINATION D'UNE CARTE DE RÉSEAU DÉFINISSANT UNE STRUCTURE D'UN RÉSEAU

(43) Date of publication of application: 28.10.2020
(73) Proprietor: Hitachi Energy Switzerland AG, 5400 Baden (CH)
(72) Inventor: OHMAN, Jimmy, 77160 LUDVIKA (SE)
(74) Representative: AWA Sweden AB

(56) References cited:
- WO-A1-2015/183517
- WO-A1-2016/003868
- WO-A1-2018/113960
- US-A1- 2019 109 891
- US-B1- 8 548 607

## Description

### TECHNICAL FIELD

The present disclosure relates to the field of network structures, and particularly to determining a network map defining a structure of a network comprising at least one master node and a plurality of slave nodes. The network can form part of an HVDC (High Voltage Direct Current) converter.

### BACKGROUND

High Voltage Direct Current (HVDC) is increasing in usage due to a number of benefits compared to AC (Alternating Current) for power transmission. In order to connect an HVDC link or an HVDC grid to an AC grid, conversion needs to occur from DC (Direct Current) to AC or AC to DC. This conversion can for example be performed using a converter device such as a voltage source converter (VSC).

Modular Multilevel Converters (MMC) is a type of VSC converter which may comprise a large number of converter cells which needs to be controlled. In such converter devices, slave nodes (in the form of converter cells) are controlled by a master node (in the form of a main controller) to synthesize the conversion. When there are many converter cells, each converter cell needs to be able to receive a signal from the main controller, which can get complicated when the number of converter cells is large. Due to the number of converter cells, there is a risk of a misconfiguration at installation or maintenance, where one or more signal connections could be incorrectly installed.

WO 2018/113960 A1 discloses multi-cell converters and the communication between the cells of such converters and the control unit(s).

### SUMMARY

One objective is to provide a reliable way to determine a structure of a network comprising a plurality of nodes.

It is provided a method for determining a network map defining a structure of a network comprising at least one master node and a plurality of slave nodes, wherein each node is connected to at least one other node via respective ports. The method is performed in a network determiner and comprises the steps of: generating a probing message, the probing message comprising a forward routing table comprising a plurality of routing entries, a backward routing table comprising a plurality of routing entries, and at least one routing pointer, wherein each routing entry defines an outward port for a slave node to route the probing message, and the at least one routing pointer pointing how far in the forward routing table or the backward routing table the probing message has been routed; transmitting the probing message from a master node to a slave node; determining whether the probing message was successfully routed according to both the forward routing table and the backward routing table, and updating the network map based on whether the probing message was successfully routed; and repeating the steps of generating the probing message, transmitting the probing message, and determining whether the probing message was successfully routed, to further update the network map.

The plurality of slave nodes may be converter cells of a modular multilevel voltage source converter.

The step of determining whether the probing message was successfully routed may be based on whether the probing message was returned to the network determiner.

The step of determining whether the probing message was successfully routed may comprise determining, when the probing message was returned, the path of the forward routing table and the backward routing table is operational, and when the probing message was not returned, the path of the forward routing table and the backward routing table contains a broken link.

The last entry in the forward routing table may define a destination node of the probing message, in which case the probing message comprises a data structure for the destination node to include state information associated with its ports.

The state information may be one of operational, not operational and faulty.

The probing message may comprise a data structure for the destination node to include node identity data.

The method may further comprise the step of: when a probing message which fails to include a valid node identity is returned to the network determiner, determining a node identity for the destination node and transmitting the node identity to the destination node.

The step of repeating may comprise repeating the steps of generating the probing message, transmitting the probing message, and determining whether the probing message was successfully routed, until probing messages have been generated and transmitted so that all slave nodes and all active ports of all slave nodes have been covered by at least one probing message.

The method may further comprise the step of: comparing the network map with an expected network map, to identify any discrepancies.

According to a second aspect, it is provided a network determiner for determining a network map defining a structure of a network comprising at least one master node and a plurality of slave node. Each node is connected to at least one other node via respective ports. The network determiner comprises: a processor; and a memory storing instructions that, when executed by the processor, cause the network determiner to: generate a probing message, the probing message comprising a forward routing table comprising a plurality of routing entries, a backward routing table comprising a plurality of routing entries, and at least one routing pointer, wherein each routing entry defines an outward port for a slave node to route the probing message, and the at least one routing pointer pointing how far in the forward routing table or the backward routing table the probing message has been routed; transmit the probing message from a master node to a slave node; determine whether the probing message was successfully routed according to both the forward routing table and the backward routing table, and updating the network map based on whether the probing message was successfully routed; and repeat the instructions to generate the probing message, transmit the probing message, and determine whether the probing message was successfully routed, to further update the network map.

The plurality of slave nodes may be converter cells of a modular multilevel voltage source converter.

The instructions to determine whether the probing message was successfully routed may comprise instructions that, when executed by the processor, cause the network determiner to determine whether the probing message was successfully routed based on whether the probing message was returned to the network determiner.

The instructions to determine whether the probing message was successfully routed may comprise instructions that, when executed by the processor, cause the network determiner to determine, when the probing message was returned, the path of the forward routing table and the backward routing table to be operational, and determine when the probing message was not returned, the path of the forward routing table and the backward routing table to contain a broken link.

The last entry in the forward routing table may define a destination node of the probing message, in which case the probing message comprises a data structure for the destination node to include state information associated with its ports.

The state information may be one of operational, not operational and faulty. In one example, the state information comprises information that port 1 and port 2 are faulty while port 3 and port 4 are operational.

The probing message may comprise a data structure for the destination node to include node identity data.

The network determiner may further comprise instructions that, when executed by the processor, cause the network determiner to: when a probing message which fails to include a valid node identity is returned, determine a node identity for the destination node and transmit the node identity to the destination node.

The instructions to repeat may comprise instructions that, when executed by the processor, cause the network determiner to repeat the instructions to generate the probing message, transmit the probing message, and determine whether the probing message was successfully routed, until probing messages have been generated and transmitted so that all slave nodes and all active ports of all slave nodes have been covered by at least one probing message.

The network determiner may further comprise instructions that, when executed by the processor, cause the network determiner to: compare the network map with an expected network map, to identify any discrepancies.

According to a third aspect, it is provided a computer program for determining a network map defining a structure of a network comprising at least one master node and a plurality of slave nodes, wherein each node is connected to at least one other node via respective ports. The computer program comprises computer program code which, when run on a network determiner causes the network determiner to: generate a probing message, the probing message comprising a forward routing table comprising a plurality of routing entries, a backward routing table comprising a plurality of routing entries, and at least one routing pointer, wherein each routing entry defines an outward port for a slave node to route the probing message, and the at least one routing pointer pointing how far in the forward routing table or the backward routing table the probing message has been routed; transmit the probing message from a master node to a slave node; determine whether the probing message was successfully routed according to both the forward routing table and the backward routing table, and updating the network map based on whether the probing message was successfully routed; and repeat the program code to generate the probing message, transmit the probing message, and determine whether the probing message was successfully routed, to further update the network map.

According to a fourth aspect, it is provided a computer program product comprising a computer program according to the third aspect and a computer readable means on which the computer program is stored.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Fig 1 is a schematic diagram illustrating one embodiment of a converter device for converting between DC and AC in which embodiments presented herein can be applied;
Figs 2A-B are schematic diagrams illustrating the structure of converter arms of the converter device of Fig 1 according to two embodiments with varying connectivity options to the main controller;
Fig 3 is a schematic diagram illustrating the network of Figs 2A-B from a network structure perspective;
Fig 4 is a schematic diagram illustrating a network similar to that of Fig 3, but where a couple of the network links are faulty;
Fig 5 is a schematic diagram illustrating a network similar to that of Fig 3, but where a mistake was made in connections during installation;
Fig 6 is a flow chart illustrating a method for determining a network map defining a structure of a network comprising at least one master node and a plurality of slave nodes;
Fig 7 is a schematic diagram illustrating components of any the network determiner of Figs 3-5 according to one embodiment;
Fig 8 shows one example of a computer program product comprising computer readable means; and
Fig 9 is a schematic diagram illustrating a probing message.

### DETAILED DESCRIPTION

The aspects of the present disclosure will now be described more fully hereinafter with reference to the accompanying drawings, in which certain embodiments of the invention are shown. These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

Embodiments presented herein relate to determining a network map defining a structure of a network comprising at least one master node and a plurality of slave nodes. This is based on a network determiner generating probing messages which are routed to the slave nodes using physical addressing, i.e. from node to node using specified ports. The probing message also contains routing information on how the probing message should be returned to the network determiner. If the probing message is not returned to the network determiner, the network determiner can deduce that there is a broken link somewhere in the route of the probing message. More probing messages are generated and sent out to thereby determine the network map based on the physical structure of the slave nodes, i.e. how the slave nodes are connected to each other and to the master node(s).

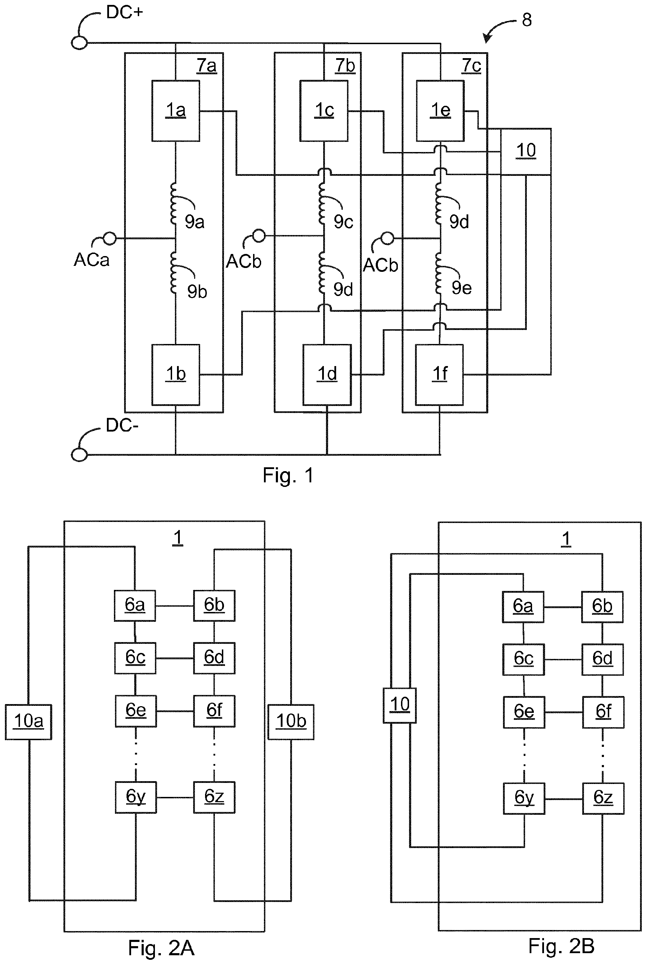

These embodiments can be applied e.g. in the context of converter stations for converting between AC and DC, such as an MMC. Fig 1 is a schematic diagram illustrating one embodiment of a converter device 8 for converting between DC and AC. The DC connection comprises a positive terminal DC⁺ and a negative terminal DC- and can be an HVDC connection. The AC connection in this embodiment is a three-phase connection comprising three AC connections ACₐ, AC_{b} and AC_{c} and can be connected e.g. to an AC grid. While the converter device 8 is here shown with three phases, the converter device 8 can equally well have one, two, four or more phases.

Since there are three phases here, there are three phase legs 7a-c. The three phase legs 7a-c are connected in parallel between terminals DC+, DC- of the DC connection. In this embodiment, a first phase leg 7a comprises a first converter arm 1a, a first inductor 9a, a second inductor, 9b and a second converter arm 1b connected serially between the terminals DC⁺, DC- of the DC connection. Analogously, a second phase leg 7b comprises a third converter arm 1c, a third inductor 9c, a fourth inductor, 9d and a fourth converter arm 1d connected serially between the terminals DC+, DC- of the DC connection, and a third phase leg 7c comprises a fifth converter arm 1e, a fifth inductor 9e, a sixth inductor, 9f and a sixth converter arm 1f connected serially between the terminals DC⁺, DC- of the DC connection. The AC terminals ACₐ, AC_{b} and AC_{c} are provided between the inductors 9a-b of the respective phase legs 7a-c. Optionally, only one inductor is provided in each phase leg 7a-c.

A main controller in the form of a master node 10 is connected to all converter arms 1a-f and sends signals to control the operation of the converter arms 1a-f. In this way, the master node 10 controls the operation of the converter arms for conversion from AC to DC or from DC to AC. Additionally, slave nodes in the form of converter cells (e.g. of an MMC) in the converter arms can send signals to the master node 10, e.g. containing measurements, other operational data or any other suitable data. The converter device 8 can be unidirectional in either direction between AC and DC or bidirectional. The converter device 8 in this embodiment is a voltage source converter.

While the converter device 8 is here shown with two converter arms for each phase leg, each phase could comprise any suitable number (1, 2, 3, etc.) of serially connected converter arms, controlled by the master node 10. In particular, if there is a large number of converter cells needed for a phase leg, the phase leg can comprise more than two converter arms.

Figs 2A-B are schematic diagrams illustrating the structure of converter arms 1 of the converter device 8 of Fig 1 according to two embodiments with varying connectivity options to one or more master nodes. The converter arm 1 can be any one of the converter arms 1a-f shown in Fig 1. First, the structure of the converter arm shown in Fig 2A will be described.

The converter arm 1 comprises a plurality of converter cells in the form of slave nodes 6a-6z. Two slave nodes 6a, 6y are connected to a first master node 10a and two slave nodes 6b, 6z are connected to a second master node 10b. The two master nodes 10a-b are redundant and operate in the same way, with one master node being active and one master node being in hot standby. The master node in hot standby is able to step in and quickly take over control if needed, e.g. due to a failing active master node.

The number of slave nodes in the converter arm can vary greatly from installation to installation and can e.g. reach hundreds of slave nodes. Each slave node 6a-z is in the form of a converter cell comprising a switching cell with semiconductor switches and an energy storage element, e.g. in the form of a half-bridge structure or full-bridge structure. The signal connections are bidirectional connections.

Each slave node 6a-z is connected to receive a signal from either one of the neighbouring entities via a port. Neighbouring is here to be interpreted as adjacent with a direct signal connection. For example, a first slave node 6a has two neighbouring slave nodes: a second slave node 6b and a third slave node 6c. Moreover, the first slave node 6a is directly connected to the first master node 10a.

The embodiment illustrated in Fig 2B is similar to the embodiment illustrated in Fig 2A. Here, however, there is a single master node 10 with four individual connections from the master node to the four connections to the connected slave nodes 6a-b, 6y-z. This embodiment provides a simpler and less expensive solution compared to the embodiment of Fig 2A.

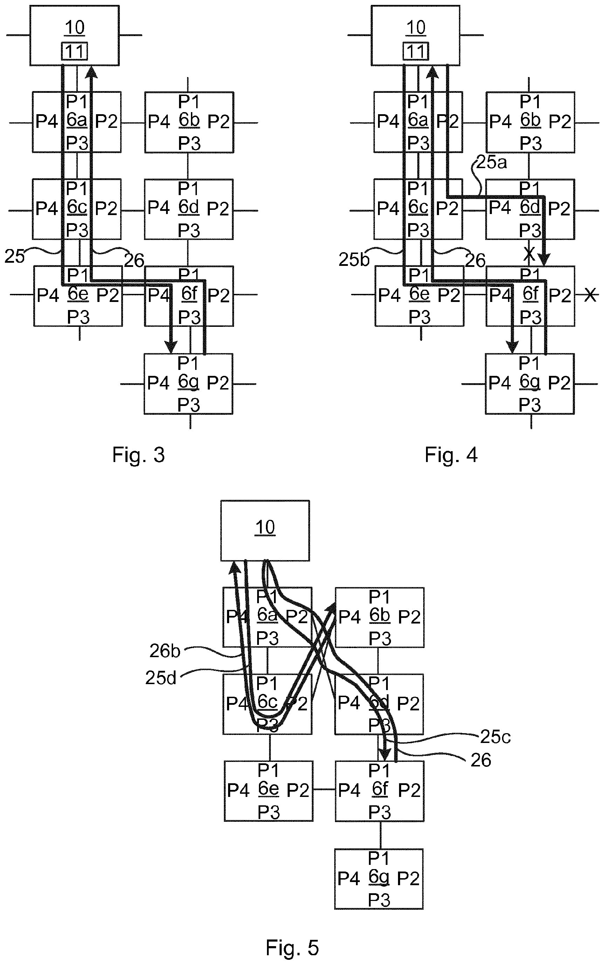

Fig 3 is a schematic diagram illustrating the network from a network structure perspective. The network forms part of a converter device and comprises a master node 10 and slave nodes 6a-g. It will here be described how the network structure can be determined by a network determiner 11. While only one master node 10 is shown here, the network can also be provided with more master nodes.

In this example, each slave node 6a-g comprises four ports P1-P4. However, the principles herein can be applied for nodes with any number of ports, as long as there are at least two ports on some of the slave nodes. The master node 10 here comprises the network determiner 11. It is to be noted that the network determiner 11 could also be provided external, but connected, to the master node 10, as a separate device or forming part of another device.

The structure in Fig 3 shows how the nodes 10, 6a-g are connected and via what ports. According to embodiments presented herein, the network determiner generates probing messages containing routing tables, which are transmitted from the master node in the network do determine the structural relationship of the network. Based on whether the probing message is returned, the network determiner can update a network map and eventually determine a complete view of the structure of the network.

The probing message is a form of data packet, but does not need to carry user data. The probing message comprises a forward routing table and a backward routing table. In the example of Fig 3, there is a forward route 25 and a backward route 26. The forward route is defined by the forward routing table shown in Table 1. It is to be noted that the hop column is not necessary as long as there is an order in the port column. The hop column is included here to allow a clearer description of how the routing works. A routing pointer is also provided to track progression of the probing message through the network. The routing pointer is updated by the slave nodes as the probing message passes through the network. Hence, the slave nodes use the routing pointer to extract the routing information from the routing tables since the routing pointer points to the routing information for the slave node to use.

**Table 1: Forward routing table for Fig 3**

| **Hop #** | **Port #** |
|---|---|
| 1 | P₁ |
| 2 | P₃ |
| 3 | P₃ |
| 4 | P₂ |
| 5 | P₃ |
| 6 | None |

Looking now to Table 1, when the forward routing starts, the routing pointer points at hop number one. The first hop is defined by a hop on port 1 (the only port) from the master node 10, resulting in a hop to the first slave node 6a. The routing pointer is updated to point at hop number two. The second hop is defined by a hop on port 3 (from the first slave node 6a), resulting in a hop to the third slave node 6c. The routing pointer is updated to point at hop number three. The third hop is defined by a hop on port 3 (from the third slave node 6c), resulting in a hop to the fifth slave node 6e. The routing pointer is updated to point at hop number four. The fourth hop is defined by a hop on port 2 (from the fifth slave node 6e), resulting in a hop to the sixth slave node 6f. The routing pointer is updated to point at hop number five. The fifth hop is defined by a hop on port 3 (from the sixth slave node 6f), resulting in a hop to the seventh slave node 6g. The routing pointer is updated to point at hop number 6. The sixth hop has no port and thus indicates that the destination is reached. Since the routing pointer is pointing to a hop with no port number, the seventh slave node 6g can deduce that it is the destination. It is to be noted that the last hop can define the destination in other ways, e.g. by a specific last destination indicator in the table or in any other suitable way.

Hence, using the routing table and the routing pointer, a destination is defined using the connection between the ports of the nodes. No other identifiers of any nodes are needed at this stage. Specifically, there are no explicit node identifiers in forward routing table (nor in the backward routing table).

The destination node, in this case the seventh slave node, populates any applicable data (explained in more detail below) in the probing message and commences transmission of the probing message in accordance with the backward routing table. The backward route is included in the probing message and is shown in Table 2:

**Table 2: Backward routing table for Fig 3**

| **Hop #** | **Port** # |
|---|---|
| 1 | P₁ |
| 2 | P₄ |
| 3 | P₁ |
| 4 | P₁ |
| 5 | P₁ |
| 6 | None |

Looking now to Table 2, when the backward routing starts from the seventh slave node 6g, the routing pointer points at hop number one. The routing pointer can be a routing pointer which is used for both the forward and backward routing tables (since these are not used simultaneously) or there can be separate pointers for the forward and backward routing tables. The first hop is defined by a hop on port 1 (from the seventh slave node 6g), resulting in a hop to the sixth slave node 6f. The routing pointer is updated to point at hop number two. The second hop is defined by a hop on port 4 (from the sixth slave node 6f), resulting in a hop to the fifth slave node 6e. The routing pointer is updated to point at hop number three. The third hop is defined by a hop on port 1 (from the fifth slave node 6e), resulting in a hop to the third slave node 6c. The routing pointer is updated to point at hop number four. The fourth hop is defined by a hop on port 1 (from the third slave node 6c), resulting in a hop to the first slave node 6a. The routing pointer is updated to point at hop number five. The fifth hop is defined by a hop on port 1 (from the first slave node 6a), resulting in a hop to the master node 10. The routing pointer is updated to point at hop number 6. The sixth hop has no port and thus indicates that the destination is reached, which for the backward route is the master node 10 from which the probing message was sent.

The probing message has now successfully followed the forward route 25 as well as the backward route 26. The network determiner 11 can thus deduce that all the traversed links are functional. Additionally, the routing functionality of the traversed slave nodes is verified. It is to be noted that the backward route can be the reverse path of the forward route (same path but in the other direction). Nevertheless, the network determiner is also free to define the backward routing path to follow a different path than the path defined by the forward routing table.

Fig 4 is a schematic diagram illustrating a network similar to that of Fig 3, but where a couple of the network links are faulty.

In this example, the network determiner 11 defines a probing message following a first forward route 25a destined for the seventh slave node 6g. However, the link between the fourth slave node 6d and the sixth slave node 6f is faulty (or not existent), whereby the probing message will not be returned to the network determiner 11. This will be detected by the network determiner and a new probing message will be defined with a second forward route 25b destined for the seventh slave node 6g. As with the scenario in Fig 3, the seventh slave node 6g will receive the probing message, recognise that it is the destination and return the probing message along the backward route 26.

The returning probing message may include state information on link status for each of the ports of the destination slave node, in this case the seventh slave node 6g. The probing message is returned along the backward route 26. In this example, the information with the returning message would include the information shown in Table 3, reflecting the link status illustrated in Fig 4:

**Table 3: State information in the returned probe message**

| **Port #** | **State Information** |
|---|---|
| 1 | Faulty |
| 2 | Faulty |
| 3 | Operational |
| 4 | Operational |

Fig 5 is a schematic diagram illustrating a network similar to that of Fig 3, but where a mistake was made in connections during installation. The installation was supposed to be the same as shown in Fig 3, where the first slave node 6a is directly connected to the second slave node 6b, and the third slave node is directly connected to the fourth slave node 6d. However, during installation mistakes happen, especially when there is a large number of slave nodes. Hence, the connections were mixed up and the first slave node 6a is here directly connected to the fourth slave node 6d and the third slave node 6c is directly connected to the second slave node 6b.

The network determiner 11 here generates a first probing message with a third forward route 25c and a first backward route 26a defined using ports as described above. Furthermore, the destination node writes its node id in the probing message before it is returned according to the backward route. In this case, it is the node id of the sixth slave node 6f that is returned to the network determiner in the first probing message.

Moreover, the network determiner 11 generates a second probing message with a fourth forward route 25d and a second backward route 26b. Again, the destination node writes its node id in the probing message before it is returned according to the backward route. In this case, it is the node id of the second slave node 6b that is returned to the network determiner in the second probing message.

However, if the network was correctly configured, both the first and the second probing messages would result in the node id of the fourth slave node 6d being returned to the network determiner 11. When the network determiner 11 is aware of the planned network structure, it will thus detect the discrepancy in node ids and detects the incorrect network structure.

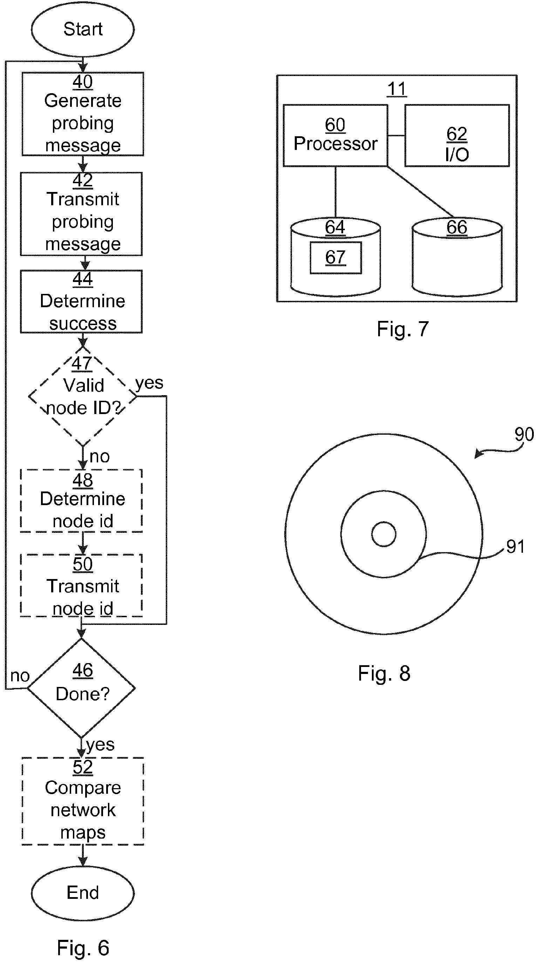

Fig 6 is a flow chart illustrating a method for determining a network map defining a structure of a network comprising at least one master node and a plurality of slave nodes. The network map is a logical map defining the structure of the network and does not need to be an image. As explained above, each node is connected to at least one other node via respective ports. The method is performed in a network determiner. At least some of the nodes are connected to several other nodes via respective ports. The plurality of slave nodes can be converter cells of a modular multilevel voltage source converter.

In a *generate probing message* step 40, the network determiner generates a probing message. The probing message comprises a forward routing table comprising a plurality of routing entries, a backward routing table comprising a plurality of routing entries, and at least one routing pointer. Each routing entry defines an outward port for a slave node to route the probing message. The at least one routing pointer points (to a routing entry indicating) how far in the forward routing table or the backward routing table the probing message has been routed. As mentioned above, it is to be noted that there can be one routing pointer used for both the forward and backward routing tables, since forward routing and backward routing does not need to occur simultaneously. Nevertheless, there can also be two separate routing pointers.

As shown above, the last entry in the forward routing table can define a destination node of the probing message. Additionally, the probing message can comprise a data structure for the destination node to include state information associated with its ports. The state information informs about the current state of a particular port, and can e.g. be one of operational, not operational and faulty. Alternatively, only operational and not operational are the two possible states. The destination node can thus include state information for all its ports before the probing message is returned to the slave node. This state information is then included in the message when it is backward routed to the original node.

Optionally, the probing message comprises a data structure for the destination node to include node identity data. As explained in more detail below, this allows node identities in the network to be set in a consistent and non-conflicting manner.

In a *transmit probing message* step 42, the network determiner transmits the probing message from a master node to a slave node. When the network determiner forms part of the master node, this occurs in the same node. Otherwise, the network determiner can trigger the master node to transmit the probing message. The probing message is then routed according to the route defined in its forward routing table and the backward routing table.

In a *determine success* step 44, the network determiner determines whether the probing message was successfully routed according to both the forward routing table and the backward routing table. The network determiner then updates the network map based on whether the probing message was successfully routed. The successful routing can be based on whether the probing message was returned to the network determiner. In other words, when the probing message is returned to the network determiner, this indicates successful routing and when the probing message is not returned (within a time-out period), this indicates unsuccessful routing.

In other words, the network determiner can then determine, when the probing message was returned, that the path of the forward routing table and the backward routing table is operational. When the probing message was not returned, the network determiner can determine that the path of the forward routing table and the backward routing table contains a broken link or missing link.

Steps 47 to 50 are performed when an optional procedure of determining node identities is to be performed. These steps are based on the probing message containing the data structure for the destination node to include node identity data.

In an optional conditional *valid node* id step 47, the network determiner examines the data structure of the returned probing message to evaluate any included node identity data of the destination node. If there is no node identity there or if the node identity is invalid (e.g. not in accordance with specific structure or if the node identity conflicts with another node identity), the network determiner considers there to be no valid node identity for the destination node and the method proceeds to an optional *determine node* id step 48. On the other hand, if there is a valid node identity, the method proceeds to a conditional *done* step 46.

In the optional *determine node* id step 48, the network determiner determines a node identity for the destination node. This can be generated by the network determiner as a node identity according to a predetermined nomenclature. The determined node identity is unique at least within the network.

In an optional *transmit node* id step 50, the network determiner transmits the node identity to the destination node. The node identity can be addressed in the same way as the probing message, i.e. using the forward routing table.

In a conditional *done* step 46, the network determiner evaluates whether more probing messages need to be generated and transmitted. Probing messages are generated and transmitted so that all slave nodes and all ports (at least the active ports) are covered by at least one probing message. If more probing messages are needed, the probing is not done, and the method returns to the *generate probing message* step 40. Otherwise, the method ends or proceeds to an optional compare network maps step 52.

When the probing is done, the network determiner has a complete network map defining the structure of the slave nodes in relationship to the master node(s).

In one embodiment, steps 40, 42, 44, 47, 48 and 50 are all performed until all slave nodes have valid node identities. After this, steps 40, 42, and 44 are performed until all slave nodes have been addressed through all possible ports. Hence, each slave node will be addressed X times if it has X connected ports. Every time a slave node is addressed, the addressed slave node includes its node identifier in the returning probe message.

In the optional *compare network maps* step 52, the network determiner compares the network map, obtained through the probing described above, with an expected network map, to identify any discrepancies. This allows the network determiner to identify any inconsistencies, e.g. due to faulty wiring or installation, as illustrated in Fig 5 and described above. If the node identity in the returning probe message differs from the node identity of the addressed node according to the expected network map, it can be concluded that the network map obtained through the probing is not identical with the expected network map, and further investigation is performed.

Fig 7 is a schematic diagram illustrating components of any the network determiner 11 of Figs 3-5 according to one embodiment. It is to be noted that one or more of the mentioned components can be shared with the host device, such as the master node. Alternatively, the network determiner 11 is provided as a stand-alone device, connected to the master node.

A processor 60 is provided using any combination of one or more of a suitable central processing unit (CPU), multiprocessor, microcontroller, digital signal processor (DSP), etc., capable of executing software instructions 67 stored in a memory 64, which can thus be a computer program product. The processor 60 could alternatively be implemented using an application specific integrated circuit (ASIC), field programmable gate array (FPGA), etc. The processor 60 can be configured to execute the method described with reference to Fig 6 above.

The memory 64 can be any combination of random-access memory (RAM) and/or read only memory (ROM). The memory 64 also comprises persistent storage, which, for example, can be any single one or combination of magnetic memory, optical memory, solid-state memory or even remotely mounted memory.

A data memory 66 is also provided for reading and/or storing data during execution of software instructions in the processor 60. The data memory 66 can be any combination of RAM and/or ROM.

The network determiner 11 further comprises an I/O interface 62 for communicating with external and/or internal entities.

Other components of the network determiner 11 are omitted in order not to obscure the concepts presented herein.

Fig 8 shows one example of a computer program product comprising computer readable means. On this computer readable means, a computer program 91 can be stored, which computer program can cause a processor to execute a method according to embodiments described herein. In this example, the computer program product is an optical disc, such as a CD (compact disc) or a DVD (digital versatile disc) or a Blu-Ray disc. As explained above, the computer program product could also be embodied in a memory of a device, such as the computer program product 67 of Fig 7. While the computer program 91 is here schematically shown as a track on the depicted optical disk, the computer program can be stored in any way which is suitable for the computer program product, such as a removable solid-state memory, e.g. a Universal Serial Bus (USB) drive.

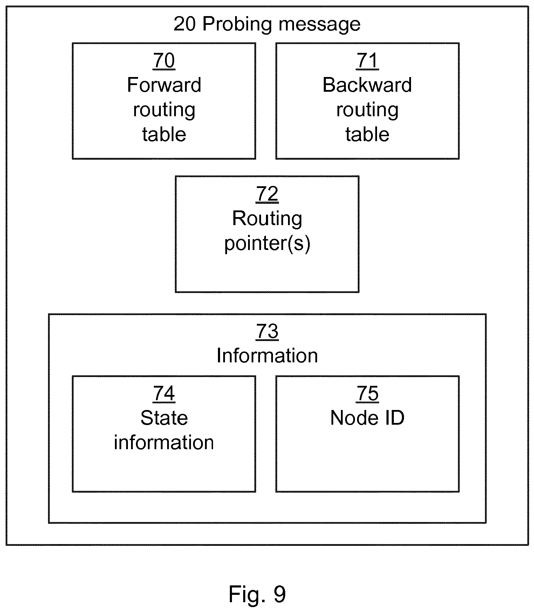

Fig 9 is a schematic diagram illustrating a probing message 20. The probing message comprises a forward routing table 70 and a backward routing table 71, as well as one or more routing pointers 72 as described in more detail above. Moreover, the probing message 20 optionally comprises additional information 73, e.g. state information and/or node id 75 according to the description above.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims. Thus, while various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method for determining a network map defining a structure of a network (19) comprising at least one master node (10) and a plurality of slave nodes (6a-z), wherein each node is connected to at least one other node via respective ports and the plurality of slave nodes (6a-f) are converter cells of a modular multilevel voltage source converter, the method being performed in a network determiner (11) and comprising the steps of:
generating (40) a probing message (20), the probing message (20) comprising a forward routing table (21) comprising a plurality of routing entries, a backward routing table (22) comprising a plurality of routing entries, and at least one routing pointer, wherein each routing entry defines an outward port for a slave node (6a-z) to route the probing message (20), and the at least one routing pointer pointing how far in the forward routing table or the backward routing table the probing message has been routed;
transmitting (42) the probing message (20) from a master node (10) to a slave node;
determining (44) whether the probing message (20) was successfully routed according to both the forward routing table and the backward routing table based on whether the probing message was returned to the network determiner (11), and updating the network map based on whether the probing message (20) was successfully routed; and
repeating (46) the steps of generating (40) the probing message, transmitting (42) the probing message, and determining (44) whether the probing message was successfully routed, to further update the network map.

2. The method according to claim 1, wherein the step of determining (44) whether the probing message was successfully routed comprises determining, when the probing message was returned, the path of the forward routing table and the backward routing table is operational, and when the probing message was not returned, the path of the forward routing table and the backward routing table contains a broken link.

3. The method according to claim 1 or claim 2, wherein the last entry in the forward routing table defines a destination node of the probing message, and wherein the probing message comprises a data structure for the destination node to include state information associated with its ports.

4. The method according to claim 3, wherein the state information is one of operational, not operational and faulty.

5. The method according to claim 3 or 4, wherein the probing message comprises a data structure for the destination node to include node identity data.

6. The method according to claim 5, further comprising the step of:
when a probing message which fails to include a valid node identity is returned to the network determiner, determining (48) a node identity for the destination node and transmitting (50) the node identity to the destination node.

7. The method according to any one of the preceding claims, wherein the step of repeating comprises repeating the steps of generating (40) the probing message, transmitting (42) the probing message, and determining (44) whether the probing message was successfully routed, until probing messages have been generated and transmitted so that all slave nodes and all active ports of all slave nodes have been covered by at least one probing message.

8. The method according to any one of the preceding claims, further comprising the step of:
comparing (52) the network map with an expected network map, to identify any discrepancies.

9. A network determiner (11) for determining a network map defining a structure of a network (19) comprising at least one master node (10) and a plurality of slave nodes (6a-z), wherein each node is connected to at least one other node via respective ports and the plurality of slave nodes (6a-f) are converter cells of a modular multilevel voltage source converter, the network determiner (11) comprising:
a processor (60); and
a memory (64) storing instructions (67) that, when executed by the processor, cause the network determiner (11) to:
generate a probing message (20), the probing message (20) comprising a forward routing table (21) comprising a plurality of routing entries, a backward routing table (22) comprising a plurality of routing entries, and at least one routing pointer, wherein each routing entry defines an outward port for a slave node (6a-z) to route the probing message (20), and the at least one routing pointer pointing how far in the forward routing table or the backward routing table the probing message has been routed;
transmit the probing message (20) from a master node (10) to a slave node;
determine whether the probing message (20) was successfully routed according to both the forward routing table and the backward routing table based on whether the probing message was returned to the network determiner (11), and updating the network map based on whether the probing message (20) was successfully routed; and
repeat the instructions to generate the probing message, transmit the probing message, and determine whether the probing message was successfully routed, to further update the network map.

10. A computer program (67, 91) for determining a network map defining a structure of a network (19) comprising at least one master node (10) and a plurality of slave nodes (6a-z), wherein each node is connected to at least one other node via respective ports and the plurality of slave nodes (6a-f) are converter cells of a modular multilevel voltage source converter, the computer program comprising computer program code which, when run on a network determiner (11) causes the network determiner (11) to:
generate a probing message (20), the probing message (20) comprising a forward routing table (21) comprising a plurality of routing entries, a backward routing table (22) comprising a plurality of routing entries, and at least one routing pointer, wherein each routing entry defines an outward port for a slave node (6a-z) to route the probing message (20), and the at least one routing pointer pointing how far in the forward routing table or the backward routing table the probing message has been routed;
transmit the probing message (20) from a master node (10) to a slave node;
determine whether the probing message (20) was successfully routed according to both the forward routing table and the backward routing table based on whether the probing message was returned to the network determiner (11), and updating the network map based on whether the probing message (20) was successfully routed; and
repeat the program code to generate the probing message, transmit the probing message, and determine whether the probing message was successfully routed, to further update the network map.

11. A computer program product (64, 90) comprising a computer program according to claim 10 and a computer readable means on which the computer program is stored.

## Patentansprüche

1. Verfahren zum Bestimmen einer Netzwerkkarte, die eine Struktur eines Netzwerks (19) definiert, das mindestens einen Master-Knoten (10) und eine Mehrzahl von Slave-Knoten (6a-z) umfasst, wobei jeder Knoten mit mindestens einem anderen Knoten über jeweilige Anschlüsse verbunden ist und die Mehrzahl von Slave-Knoten (6a-f) Wandlerzellen eines modularen Multilevel-Spannungsquellenwandlers sind, wobei das Verfahren in einem Netzwerk-Bestimmer (11) durchgeführt wird und die folgenden Schritte umfasst:
Erzeugen (40) einer Sondierungsnachricht (20), wobei die Sondierungsnachricht (20) eine Vorwärts-Routing-Tabelle (21) umfasst, die eine Mehrzahl von Routing-Einträgen umfasst, eine Rückwärts-Routing-Tabelle (22), die eine Mehrzahl von Routing-Einträgen umfasst, und mindestens einen Routing-Pointer, wobei jeder Routing-Eintrag einen nach außen gerichteten Anschluss für einen Slave-Knoten (6a-z) definiert, um die Sondierungsnachricht (20) zu routen, und der mindestens eine Routing-Pointer anzeigt, wie weit in der Vorwärts-Routing-Tabelle oder der Rückwärts-Routing-Tabelle die Sondierungsnachricht geroutet wurde;
Übertragen (42) der Sondierungsnachricht (20) von einem Master-Knoten (10) an einen Slave-Knoten;
Bestimmen (44), ob die Sondierungsnachricht (20) sowohl gemäß der Vorwärts-Routing-Tabelle als auch der Rückwärts-Routing-Tabelle basierend darauf, ob die Sondierungsnachricht an den Netzwerk-Bestimmer (11) zurückgegeben wurde, erfolgreich geroutet wurde, und
Aktualisieren der Netzwerkkarte basierend darauf, ob die Sondierungsnachricht (20) erfolgreich geroutet wurde; und
Wiederholen (46) der Schritte des Erzeugens (40) der Sondierungsnachricht, des Übertragens (42) der Sondierungsnachricht und des Bestimmens (44), ob die Sondierungsnachricht erfolgreich geroutet wurde, um die Netzwerkkarte weiter zu aktualisieren.

2. Verfahren nach Anspruch 1, wobei der Schritt des Bestimmens (44), ob die Sondierungsnachricht erfolgreich geroutet wurde, das Bestimmen umfasst, dass, wenn die Sondierungsnachricht zurückgegeben wurde, der Pfad der Vorwärts-Routing-Tabelle und der Rückwärts-Routing-Tabelle betreibbar ist, und dass, wenn die Sondierungsnachricht nicht zurückgegeben wurde, der Pfad der Vorwärts-Routing-Tabelle und der Rückwärts-Routing-Tabelle einen unterbrochenen Link enthält.

3. Verfahren nach Anspruch 1 oder Anspruch 2, wobei der letzte Eintrag in der Vorwärts-Routing-Tabelle einen Zielknoten der Sondierungsnachricht umfasst, und wobei die Sondierungsnachricht eine Datenstruktur für den Zielknoten umfasst, um Zustandsinformationen zu beinhalten, die seinen Anschlüssen zugeordnet sind.

4. Verfahren nach Anspruch 3, wobei die Zustandsinformationen betreibbar, nicht betreibbar oder fehlerhaft sind.

5. Verfahren nach Anspruch 3 oder 4, wobei die Sondierungsnachricht eine Datenstruktur für den Zielknoten umfasst, um Knotenidentitätsdaten zu beinhalten.

6. Verfahren nach Anspruch 5, ferner umfassend den folgenden Schritt:
wenn eine Sondierungsnachricht, die keine gültige Knotenidentität beinhaltet, an den Netzwerk-Bestimmer zurückgegeben wird, Bestimmen (48) einer Knotenidentität für den Zielknoten und Übertragen (50) der Knotenidentität an den Zielknoten.

7. Verfahren nach einem der vorhergehenden Ansprüche, wobei der Schritt des Wiederholens das Wiederholen der Schritte des Erzeugens (40) der Sondierungsnachricht, des Übertragens (42) der Sondierungsnachricht und des Bestimmens (44), ob die Sondierungsnachricht erfolgreich geroutet wurde, umfasst, bis Sondierungsnachrichten so erzeugt und übertragen worden sind, dass alle Slave-Knoten und alle aktiven Anschlüsse aller Slave-Knoten von mindestens einer Sondierungsnachricht abgedeckt worden sind.

8. Verfahren nach einem der vorhergehenden Ansprüche, ferner umfassend den folgenden Schritt:
Vergleichen (52) der Netzwerkkarte mit einer erwarteten Netzwerkkarte, um etwaige Diskrepanzen zu identifizieren.

9. Netzwerk-Bestimmer (11) zum Bestimmen einer Netzwerkkarte, die eine Struktur eines Netzwerks (19) definiert, das mindestens einen Master-Knoten (10) und eine Mehrzahl von Slave-Knoten (6a-z) umfasst, wobei jeder Knoten mit mindestens einem anderen Knoten über jeweilige Anschlüsse verbunden ist und die Mehrzahl von Slave-Knoten (6a-f) Wandlerzellen eines modularen Multilevel-Spannungsquellenwandlers sind, wobei der Netzwerk-Bestimmer (11) umfasst:
einen Prozessor (60), und
einen Speicher (64), der Anweisungen (67) speichert, die, wenn sie vom Prozessor ausgeführt werden, den Netzwerk-Bestimmer (11) veranlassen:
eine Sondierungsnachricht (20) zu erzeugen, wobei die Sondierungsnachricht (20) eine Vorwärts-Routing-Tabelle (21) umfasst, die eine Mehrzahl von Routing-Einträgen umfasst, eine Rückwärts-Routing-Tabelle (22), die eine Mehrzahl von Routing-Einträgen umfasst, und mindestens einen Routing-Pointer, wobei jeder Routing-Eintrag einen nach außen gerichteten Anschluss für einen Slave-Knoten (6a-z) definiert, um die Sondierungsnachricht (20) zu routen, und der mindestens eine Routing-Pointer anzeigt, wie weit in der Vorwärts-Routing-Tabelle oder der Rückwärts-Routing-Tabelle die Sondierungsnachricht geroutet wurde;
die Sondierungsnachricht (20) von einem Master-Knoten (10) an einen Slave-Knoten zu übertragen; basierend darauf, ob die Sondierungsnachricht (20) erfolgreich geroutet wurde, sowohl gemäß der Vorwärts-Routing-Tabelle als auch der Rückwärts-Routing-Tabelle zu bestimmen, ob die Sondierungsnachricht an den Netzwerk-Bestimmer (11) zurückgegeben wurde, und die Netzwerkkarte basierend darauf zu aktualisieren, ob die Sondierungsnachricht (20) erfolgreich geroutet wurde; und
die Anweisungen zu wiederholen, um die Sondierungsnachricht zu erzeugen, die Sondierungsnachricht zu übertragen, und zu bestimmen, ob die Sondierungsnachricht erfolgreich geroutet wurde, um die Netzwerkkarte weiter zu aktualisieren.

10. Computerprogramm (67, 91) zum Bestimmen einer Netzwerkkarte, die eine Struktur eines Netzwerks (19) definiert, das mindestens einen Master-Knoten (10) und eine Mehrzahl von Slave-Knoten (6a-z) umfasst, wobei jeder Knoten mit mindestens einem anderen Knoten über jeweilige Anschlüsse verbunden ist und die Mehrzahl von Slave-Knoten (6a-f) Wandlerzellen eines modularen Multilevel-Spannungsquellenwandlers sind, wobei das Computerprogramm einen Computerprogrammcode umfasst, der, wenn er auf einem Netzwerk-Bestimmer (11) ausgeführt wird, den Netzwerk-Bestimmer (11) veranlasst:
eine Sondierungsnachricht (20) zu erzeugen, wobei die Sondierungsnachricht ((20) eine Vorwärts-Routing-Tabelle (21) umfasst, die eine Mehrzahl von Routing-Einträgen umfasst, eine Rückwärts-Routing-Tabelle (22), die eine Mehrzahl von Routing-Einträgen umfasst, und mindestens einen Routing-Pointer, wobei jeder Routing-Eintrag einen nach außen gerichteten Anschluss für einen Slave-Knoten (6a-z) definiert, um die Sondierungsnachricht (20) zu routen, und der mindestens eine Routing-Pointer anzeigt, wie weit in der Vorwärts-Routing-Tabelle oder der Rückwärts-Routing-Tabelle die Sondierungsnachricht geroutet wurde;
die Sondierungsnachricht (20) von einem Master-Knoten (10) an einen Slave-Knoten zu übertragen;
zu bestimmen, ob die Sondierungsnachricht (20) sowohl gemäß der Vorwärts-Routing-Tabelle als auch der Rückwärts-Routing-Tabelle basierend darauf, ob die Sondierungsnachricht an den Netzwerk-Bestimmer (11) zurückgegeben wurde, erfolgreich geroutet wurde, und Aktualisieren der Netzwerk-Karte basierend darauf, ob die Sondierungsnachricht (20) erfolgreich geroutet wurde; und
den Programmcode zu wiederholen, um die Sondierungsnachricht zu erzeugen, die Sondierungsnachricht zu übertragen, und zu bestimmen, ob die Sondierungsnachricht erfolgreich geroutet wurde, um die Netzwerkkarte weiter zu aktualisieren.

11. Computerprogrammprodukt (64, 90), das ein Computerprogramm nach Anspruch 10 und ein computerlesbares Mittel umfasst, auf dem das Computerprogramm gespeichert ist.

## Revendications

1. Procédé de détermination d'une carte de réseau définissant une structure d'un réseau (19) comprenant au moins un noeud maître (10) et une pluralité de noeuds esclaves (6a-z), dans lequel chaque noeud est connecté à au moins un autre noeud par des ports respectifs et la pluralité de noeuds esclaves (6a-f) consiste en cellules de conversion d'un convertisseur de source de tension multiniveaux modulaire, le procédé étant réalisé dans un déterminateur de réseau (11) et comprenant les étapes suivantes :
la génération (40) d'un message de sondage (20), le message de sondage (20) comprenant une table de routage aller (21) comprenant une pluralité d'entrées de routage, une table de routage retour (22) comprenant une pluralité d'entrées de routage et au moins un pointeur de routage, dans lequel chaque entrée de routage définit un port sortant permettant à un noeud esclave (6a-z) de router le message de sondage (20), et l'au moins un pointeur de routage indiquant jusqu'où le message de sondage a été routé dans la table de routage aller ou dans la table de routage retour ;
la transmission (42) du message de sondage (20) d'un noeud maître (10) à un noeud esclave ;
la détermination (44) que le message de sondage (20) a été routé avec succès ou non selon à la fois la table de routage aller et la table de routage retour selon que le message de sondage a été renvoyé ou non au déterminateur de réseau (11), et la mise à jour de la carte de réseau selon que le message de sondage (20) a été routé avec succès ou non ; et
la répétition (46) des étapes de génération (40) du message de sondage, de transmission (42) du message de sondage et de détermination (44) que le message de sondage a été routé avec succès ou non, afin de mettre à jour davantage la carte de réseau.

2. Procédé selon la revendication 11, dans lequel l'étape de détermination (44) que le message de sondage a été routé avec succès ou non comprend la détermination, lorsque le message de sondage a été renvoyé, que le trajet de la table de routage aller et de la table de routage retour est opérationnel ou non, et lorsque le message de sondage n'a pas été renvoyé, que le trajet de la table de routage aller et de la table de routage retour contient ou non un lien rompu.

3. Procédé selon la revendication 1 ou la revendication 2, dans lequel la dernière entrée dans la table de routage aller définit un noeud de destination du message de sondage, et dans lequel le message de sondage comprend une structure de données du noeud de destination afin d'inclure des informations d'état associées à ses ports.

4. Procédé selon la revendication 3, dans lequel les informations d'état sont opérationnel, non opérationnel ou défectueux.

5. Procédé selon la revendication 3 ou 4, dans lequel le message de sondage comprend une structure de données du noeud de destination afin d'inclure des données d'identité de noeud.

6. Procédé selon la revendication 5, comprenant en outre l'étape de :
lorsqu'un message de sondage qui ne comporte pas d'identité de noeud valide est renvoyé au déterminateur de réseau, détermination (48) d'une identité de noeud du noeud de destination et transmission (50) de l'identité de noeud au noeud de destination.

7. Procédé selon l'une quelconque des revendications précédentes, dans lequel l'étape de répétition comprend la répétition des étapes de génération (40) du message de sondage, de transmission (42) du message de sondage et de détermination (44) que le message de sondage a été routé avec succès ou non, jusqu'à ce que des messages de sondage aient été générés et transmis de telle sorte que tous les noeuds esclaves et tous les ports actifs de tous les noeuds esclaves aient été couverts par au moins un message de sondage.

8. Procédé selon l'une quelconque des revendications précédentes, comprenant en outre l'étape de :
comparaison (52) de la carte du réseau à une carte de réseau prévue, afin d'identifier toute divergence.

9. Déterminateur de réseau (11) pour déterminer une carte de réseau définissant une structure d'un réseau (19) comprenant au moins un noeud maître (10) et une pluralité de noeuds esclaves (6a-z), dans lequel chaque noeud est connecté à au moins un autre noeud par des ports respectifs et la pluralité de noeuds esclaves (6a-f) consiste en cellules de conversion d'un convertisseur de source de tension multiniveaux modulaire, le déterminateur de réseau (11) comprenant :
un processeur (60) ; et
une mémoire (64) stockant des instructions (67) qui, à leur exécution par le processeur, amènent le déterminateur de réseau (11) à :
générer un message de sondage (20), le message de sondage (20) comprenant une table de routage aller (21) comprenant une pluralité d'entrées de routage, une table de routage retour (22) comprenant une pluralité d'entrées de routage et au moins un pointeur de routage, dans lequel chaque entrée de routage définit un port sortant permettant à un noeud esclave (6a-z) de router le message de sondage (20), et l'au moins un pointeur de routage indiquant jusqu'où le message de sondage a été routé dans la table de routage aller ou dans la table de routage retour ;
transmettre le message de sondage (20) d'un noeud maître (10) à un noeud esclave ;
déterminer que le message de sondage (20) a été routé avec succès ou non selon à la fois la table de routage aller et la table de routage retour selon que le message de sondage a été renvoyé ou non au déterminateur de réseau (11), et mettre à jour la carte de réseau selon que le message de sondage (20) a été routé avec succès ou non ; et
répéter (46) les instructions pour générer le message de sondage, transmettre (42) le message de sondage et déterminer (44) que le message de sondage a été routé avec succès ou non, afin de mettre à jour davantage la carte de réseau.

10. Programme d'ordinateur (67, 91) pour déterminer une carte de réseau définissant une structure d'un réseau (19) comprenant au moins un noeud maître (10) et une pluralité de noeuds esclaves (6a-z), dans lequel chaque noeud est connecté à au moins un autre noeud par des ports respectifs et la pluralité de noeuds esclaves (6a-f) est composée de cellules de conversion d'un convertisseur de source de tension multiniveaux modulaire, le programme d'ordinateur comprenant un code de programme d'ordinateur qui, à son exécution sur un déterminateur de réseau (11), amène le déterminateur de réseau (11) à :
générer un message de sondage (20), le message de sondage (20) comprenant une table de routage aller (21) comprenant une pluralité d'entrées de routage, une table de routage retour (22) comprenant une pluralité d'entrées de routage et au moins un pointeur de routage, dans lequel chaque entrée de routage définit un port sortant permettant à un noeud esclave (6a-f) de router le message de sondage (20), et l'au moins un pointeur de routage indiquant jusqu'où le message de sondage a été routé dans la table de routage aller ou dans la table de routage retour ;
transmettre le message de sondage (20) d'un noeud maître (10) à un noeud esclave ;
déterminer que le message de sondage (20) a été routé avec succès ou non selon la table de routage aller et la table de routage retour selon que le message de sondage a été renvoyé ou non au déterminateur de réseau (11), et mettre à jour la carte de réseau selon que le message de sondage (20) a été routé avec succès ou non ; et
répéter le code de programme pour générer le message de sondage, transmettre le message de sondage et déterminer que le message de sondage a été routé avec succès ou non, afin de mettre à jour davantage la carte de réseau.

11. Produit de programme d'ordinateur (64, 90) comprenant un programme d'ordinateur selon la revendication 10 et un moyen lisible par ordinateur sur lequel le programme d'ordinateur est stocké.
